# EUROPÄISCHE PATENTSCHRIFT

(11) **EP 1 113 304 B1**
(45) Veröffentlichungstag und Bekanntmachung des Hinweises auf die Patenterteilung: **02.02.2005**
(21) Anmeldenummer: 00124105.8
(22) Anmeldetag: 07.11.2000
(51) Int. Cl.: G02B 21/00

(54) **Vorrichtung zum optischen Abtasten mehrerer Objekte**
Apparatus for the optical scanning of several objects
Dispositif pour le balayage optique de plusieurs objets

(30) Priorität: 29.11.1999 DE 19957413
(43) Veröffentlichungstag der Anmeldung: 04.07.2001
(73) Patentinhaber: Leica Microsystems Heidelberg GmbH, 68165 Mannheim (DE)
(72) Erfinder: Engelhardt, Johann, 76669 Bad Schönborn (DE)
(74) Vertreter: Reichert, Werner F., Dr.

(56) Entgegenhaltungen:
- WO-A-99/35527
- US-A- 3 848 962
- US-A- 5 532 874

## Beschreibung

Die vorliegende Erfindung betrifft eine Vorrichtung zur optischen Abtastung mehrerer Objekte und/oder Objektbereiche, wobei die Objekte einer Objektaufnahmeeinrichtung zugeordnet und von einer Abtasteinrichtung optisch abtastbar sind.

Anordnungen der gattungsbildenden Art werden insbesondere zur Detektion von "Micro-Array-Biochips" (MAB) eingesetzt. MAB finden in der medizinischen Diagnostik Verwendung, wo eine große Anzahl von MAB in kurzer Zeit zu untersuchen und auszuwerten sind. Als MAB können unter anderem Objektträger verwendet werden, bei denen eine große Anzahl spezifischer Nachweisregionen (Spots) vorzugsweise gitterförmig aufgebracht sind. Diese Nachweisregionen haben meist einen Durchmesser von etwa 50 bis 100 µm und sind hinsichtlich ihrer Fluoreszenzeigenschaften zu untersuchen. Die Spots sind auf einem Objektträger auf einem Objektfeld von bis zu 22 x 60 mm verteilt.
Mit einem herkömmlichen konfokalen Laserscanmikroskop (CLSM) können jedoch Objekte, die auf so großen Objektfeldern verteilt sind, nicht gleichzeitig abgebildet werden, da die Objektfelder der für solche Anwendungen in Frage kommenden Mikroskopobjektive hierfür zu klein sind. Eine Verwendung größerer Objektive bzw. Linsen bei relativ zu den Linsen bewegtem Strahl führt zu Bildunebenheiten und Intensitätsschwankungen. Hierbei werden die Bildunebenheiten durch Rest- bzw. Abbildungsfehler der verwendeten Linsen und Intensitätsschwankungen durch partielle Verschmutzung der optischen Komponenten im Strahlengang hervorgerufen.

Weiterhin ist der Beleuchtungsstrahlengang der CLSM's derart konfiguriert, dass der beugungsbegrenzte Scanstrahl in der Objektebene im Allgemeinen einen Durchmesser im Bereich von 1-2 µm aufweist. Die Objekte werden hierdurch mit einer für diese Anwendungen unnötigen und viel zu hohen Ortsauflösung abgetastet. Insbesondere im Laborbetrieb wird ein hoher Durchsatz zu untersuchender Objektträger gefordert, der mit den bislang bekannten CLSM's nicht erreichbar ist. Die Bedienung von CLSM's ist obendrein kompliziert und setzt eine erhebliche Bedienungserfahrung des Benutzers voraus.

Das U.S. Patent 5,532,874 offenbart eine konfokles Mikroskop, mit dem mehrere auf einem rotierbaren Teller angebrachten Objektträger mikroskopisch untersucht werden können. Das Mikroskopgehäuse ist linear zum rotierenden Teller verfahrbar. Die Objektträger sind am Rand des rotierenden Tellers aufgebracht, so dass die lineare Bewegung des Mikroskopgehäuses, die Objektträger überdecken kann. Der Nachteil ist, dass nur der Randbereich des Teller zur Aufnahme von Objektträgern verwendet wird.

Das U.S. Patent 3,848,962 offenbart Halterung für einen Objektträger in einem Mikroskop. Dabei wird der Objektträger über dem Kondensor des Mikroskops mit Vakuummitteln gehalten. Diese Lösung ist für die gegenwärtige Erfindung aufwendig und nicht praktikabel.

Der vorliegenden Erfindung liegt daher die Aufgabe zugrunde, eine Vorrichtung zur automatischen optischen Abtastung mehrerer Objekte und/oder Objektbereiche anzugeben, mit der die Datenaufnahme mehrerer Objekte in kurzer Zeit möglich ist. Die optischen Systemkomponenten sollen dabei einfach in der Konstruktion und preiswert sein. Das Gesamtsystem sollte einfach zu bedienen sein.

Die voranstehende Aufgabe wird durch die Merkmale des Patentanspruchs 1 gelöst.

Erfindungsgemäß ist zunächst erkannt worden, dass sich die Datenaufnahme vieler Objekte bzw. Objektträger in kurzer Zeit durch eine sich drehende Objektaufnahmeeinrichtung realisieren läßt. Insbesondere durch die Drehbewegung der Objektaufnahmeeinrichtung ist es in vorteilhafter Weise möglich, dasselbe Objekt mehrmals optisch abzutasten, um hierdurch beispielsweise mehrere Meßergebnisse des gleichen Objekts miteinander vergleichen zu können. Dies ist vor allem für die statistische Auswertung der gemessenen Objekte von Bedeutung. Zur Datenaufnahme vieler Objekte in möglichst kurzer Zeit kann die Objekt aufnahmeeinrichtung entsprechend groß dimensioniert werden, so dass möglichst viel Objekte bzw. Objektträger in einem Meßgang detektierbar sind.

Die Objektaufnahmeeinrichtung könnte in entgegengesetzte Richtungen drehen. So könnte beispielsweise nach einmaligem optischen Abtasten der Objekte die Objektaufnahmeeinrichtung in entgegengesetzte Richtung gedreht werden. Ebenso ist es denkbar, dass die Objektaufnahmeeinrichtung lediglich in einer Richtung, vorzugsweise endlos, dreht.

Die Abtasteinrichtung ist relativ zur Objektaufnahmeeinrichtung beweglich angeordnet. Dabei läßt sich in vorteilhafter Weise der gesamte Bereich der Objektaufnahmeeinrichtung optisch abtasten. Die Abtasteinrichtung und die Objektaufnahmeeinrichtung sind linear verschiebbar. Diese Verschiebung bzw. Relativbewegung zwischen Abtasteinrichtung und Objektaufnahmeeinrichtung könnte in radialer Richtung erfolgen. Die lineare Relativbewegung könnte auch entlang einer Sekante verlaufen.

Die Abtasteinrichtung ist um eine weitere Achse drehbar bzw. schwenkbar angeordnet, so dass die Relativbewegung zwischen Abtasteinrichtung und Objektaufnahmeeinrichtung durch eine Drehung der Abtasteinrichtung erfolgt.

In weiter vorteilhafter Weise ist der optische Weg zwischen dem Objekt und der Abtasteinrichtung bei einer Relativbewegung zwischen der Abtasteinrichtung und der Objektaufnahmeeinrichtung im wesentlichen konstant. Hierdurch wird vor allem sichergestellt, dass ein definierter Objektbereich optisch abtastbar ist, nämlich vorzugsweise der Bereich, in dem sich die abzutastenden Objekte auch tatsächlich befinden. Die Bedingung, dass der optische Weg zwischen der Objektaufnahmeeinrichtung und der Abtasteinrichtung während einer Relativbewegung im wesentlichen konstant bleibt, läßt sich durch eine entsprechende Anordnung der Achse der Objektaufnahmeeinrichtung relativ zur Bewegungsrichtung der Abtasteinrichtung realisieren. Die Forderung nach Konstanz des optischen Wegs zwischen der Objektaufnahmeeinrichtung und der Abtasteinrichtung kann durch eine im wesentlichen parallele Anordnung beider Dreh- bzw. Schwenkachsen erfüllt werden. Insbesondere bei der Verwendung von fokussiertem Abtastlicht ist gemäß voranstehender Merkmale sichergestellt, dass sich die abzutastenden Objekte von der Abtasteinrichtung aus gesehen stets an der gleichen Position im optischen Strahlengang befinden.

Im Rahmen einer alternativen Ausführungsform weist die Objektaufnahmeeinrichtung eine konstante Rotationsgeschwindigkeit auf. Insbesondere wird während der optischen Abtastung bzw. während der Datenaufnahme die Rotationsgeschwindigkeit der Objektaufnahmeeinrichtung konstant gehalten. Die Rotationsgeschwindigkeit könnte einen Wert haben, der in einem Bereich von einer bis zu dreihundert Umdrehungen pro Minute liegt.

Ebenso ist es denkbar, dass die Objektaufnahmeeinrichtung eine variable Rotationsgeschwindigkeit aufweist. Hierbei könnte die Rotationsgeschwindigkeit von der Relativposition zwischen der Objektaufnahmeeinrichtung und der Abtasteinrichtung abhängig sein. Der abzutastende Bereich in radialer Richtung nahe der Achse der Objektaufnahmeeinrichtung liefert pro Umdrehung weniger Objektinformation als ein Bereich, der von der Achse der Objektaufnahmeeinrichtung weiter entfernt ist, da sich der pro Umdrehung abgetastete Umfang verändert. Eine veränderliche Rotationsgeschwindigkeit könnte dieser Situation in vorteilhafter Weise Rechnung tragen, nämlich dass die Rotationsgeschwindigkeit vom detektierten Datenstrom der Abtasteinrichtung abhängig ist. Demzufolge könnte die Objektaufnahmeeinrichtung eine stetig zunehmende Rotationsgeschwindigkeit aufweisen, während die optische Abtastung der Abtasteinrichtung von einem Bereich nahe der Achse der Objektaufnahmeeinrichtung in radialer Richtung nach außen erfolgt.

Die Objektaufnahmeeinrichtung kann eine große Masse aufweisen. Dies ist insbesondere dann vorteilhaft, wenn die Objektaufnahmeeinrichtung mit einer konstanten Rotationsgeschwindigkeit dreht. Zur Vermeidung bzw. Minimierung einer Rotationsunwucht der Objektaufnahmeeinrichtung ist diese rotationssymetrisch mit gleicher Masseverteilung ausgestaltet.

Die Objektaufnahmeeinrichtung weist einen austauschbaren Karusselleinsatz auf. Dieser Karusselleinsatz könnte einzelne Objektträger in sich aufnehmen. Als Objektträger kommen herkömmliche, in der Mikroskopie übliche Objektträger aus Glas in Frage. Andere Objektträger, beispielsweise aus dem Bereich der MAB, sind ebenfalls verwendbar. Die einzelnen Objektträger sind in dem Karusselleinsatz in Bezug auf das Drehzentrum der Objektaufnahmeeinrichtung punktsymetrisch angeordnet, so dass bei einer Drehung der Objektaufnahmeeinrichtung um deren Drehachse keine Unwucht entsteht.

In vorteilhafter Weise sind die einzelnen Objektträger im Karusselleinsatz mit Haltemitteln in einer vorgebbaren Ebene positionierbar. Im Konkreten werden die einzelnen Objektträger federnd bzw. mit Federkraft positioniert. Diese Federkraft drückt den Objektträger gegen das Haltemittel. Durch diese Maßnahme läßt sich ein Karusselleinsatz insbesondere auch im Routinebetrieb innerhalb kürzester Zeit mit Objektträgern beladen. Darüber hinaus ist sichergestellt, dass sämtliche Objektträger in einer vorgebbaren Ebene positioniert sind.

Im Hinblick auf die statistische Auswertung einer Vielzahl von Objektträgern sind die einzelnen Objektträger mit einer spezifischen Kennung versehen. Diese Kennung könnte beispielsweise in Form eines Barcodes ausgeführt sein, denen Informationen über das zugrundeliegende Experiment, die Meßreihe oder eine Zuordnung zu einem Patienten zugeordnet sind.

Nach einer weiteren Ausführungsform ist eine Autofokussierung der Objekte vorgesehen. Die Autofokussierung könnte durch eine entsprechenden Fokussierungsoptik erfolgen, die in der Abtasteinrichtung angeordnet ist. Eine entsprechende Positionierung der Abtasteinrichtung relativ zur Objektaufnahmeeinrichtung wäre ebenfalls denkbar. Durch die Autofokussierung der Objekte kann sichergestellt werden, dass sämtliche abzutastenden Objekte auch tatsächlich fokal abgebildet werden. Die Autofokussierung der Objekte könnte hierbei nach bekannten Verfahren realisiert sein. Im Konkreten könnte die Autofokussierung nach der Triangulationsmethode erfolgen.

Im Rahmen einer weiteren Ausführungsform weist die Oberfläche der rotierenden Objektaufnahmeeinrichtung eine Abweichung in Richtung der optischen Achse der Abtasteinrichtung auf, die vorzugsweise kleiner als 20 µm ist. Alternativ hierzu weist die Oberfläche des Objektgefäßes oder der im Karusselleinsatz befindlichen Objektträger in Richtung der optischen Achse der Abtasteinrichtung eine maximale Abweichung auf, die ebenfalls vorzugsweise kleiner als 20 µm ist. Durch diese Maßnahmen könnte auf eine Autofokussierungseinrichtung verzichtet werden, wodurch sich die Datenaufnahme vereinfacht und sich die apparativen Kosten reduzieren lassen.

Die Objekte sind mit mindestens einem Laserstrahl abtastbar. Die entsprechenden Meßsignale werden mit mindestens einem Detektor detektiert. Hierbei könnte der Laserstrahl in mindestens einer Richtung relativ zur Abtasteinrichtung scannen. Alternativ könnte der Laserstrahl relativ zur Abtasteinrichtung ortsfest sein. Ein relativ zur Abtasteinrichtung ortsfester Laserstrahl ist im Hinblick auf eine einfachere Justierung und eine kostenreduzierende Produktion der Vorrichtung einem scannenden Laserstrahl vorzuziehen.

In einer weiteren Ausführungsform erfolgt das Abtasten mit Laserlicht unterschiedlicher Wellenlängen. Dies ist insbesondere dann von erheblichem Vorteil, wenn Objekte abgetastet werden, die mit unterschiedlichen Fluoreszenzfarbstoffen spezifisch markiert sind. In diesem Fall könnten die Fluoreszenzsignale mit mehreren Detektoren nachgewiesen werden.

Bei simultaner Verwendung mehrerer Laserstrahlen könnte der Strahlengang der Abtasteinrichtung derart ausgebildet sein, dass jeder Laserstrahl einen anderen Objektbereich beleuchtet. Alternativ hierzu, insbesondere bei Verwendung mehrerer Laserstrahlen unterschiedlicher Wellenlänge, könnten sämtliche Laserstrahlen denselben Objektbereich beleuchten.

In weiter vorteilhafter Weise ist die axiale Ausdehnung des Fokusbereichs des Laserstrahls im Objektbereich kleiner als 40 µm. Auch insoweit kann auf den Einsatz einer Autofokussierung verzichtet werden, wenn die maximale Abweichung der Oberfläche des rotierenden Objektbereichs stets eine maximale Abweichung in Richtung der optischen Achse aufweist, die kleiner als 20 µm ist. Bei geeigneter axialer Positionierung der Abtasteinrichtung werden sämtliche der Objektaufnahmeeinrichtung zugeordneten Objekte während der gesamten Datenaufnahme durch den Fokusbereich der Abtasteinrichtung bewegt.

Im Hinblick auf die Größe der zu vermessenden bzw. abzutastenden Objekte liegt die laterale Ausdehnung des Fokusbereichs des Laserstrahls im Objektbereich zwischen 5 µm und 200 µm. Letztendlich ist die laterale Ausdehnung des Fokusbereichs des Laserstrahls im Objektbereich derart zu wählen, dass im Hinblick auf die durchschnittliche Größe der abzutastenden Objekte das Abtasttheorem erfüllt ist. Insoweit muß der Durchmesser des Laserfokus in lateraler Richtung im Objektbereich kleiner oder gleich der Hälfte des durchschnittlichen Objektdurchmessers sein.

Die axiale bzw. laterale Ausdehnung des Fokusbereichs des Laserstrahls im Objektbereich läßt sich über den optischen Strahlengang innerhalb der Abtasteinrichtung einstellen. Insbesondere kann der optische Strahlengang der Abtasteinrichtung konfokal ausgebildet sein.

Der Einfallswinkel des Laserstrahls auf die Oberfläche der Objektaufnahmeeinrichtung, des Objektgefäßes oder des Objektträgers beträgt 10°. Hierdurch ist es in vorteilhafter Weise möglich, den Haupt-Rückreflex des Anregungslichts, der beispielsweise aus dem Übergang Objektträger-Luft resultiert, zu unterdrücken, bzw. aus dem Anregungs- und Detektionsstrahlengang auszublenden.

Dies ist insbesondere bei der Detektion von Fluoreszenzlicht von Bedeutung, da dann nämlich ein (Bandpaß)-Sperrfilter geringerer Stärke verwendbar ist und somit der entsprechende Detektor das Fluoreszenzlicht effektiver detektieren kann. Der von Null verschiedene Einfallswinkel des Laserstrahls kann dadurch realisiert werden, dass entweder die gesamte optische Anordnung in der Abtasteinrichtung oder lediglich ein einziger Spiegel entsprechend montiert bzw. justiert wird. Letztendlich muß sichergestellt sein, dass der auf die Oberfläche der Objektaufnahmeeinrichtung, des Objektgefäßes oder des Objektträgers auftreffende Laserstrahl relativ zur Achse der Objektaufnahmeeinrichtung einen entsprechenden Winkel aufweist.

Im Hinblick auf eine eindeutige Datenauswertung weist die Objektaufnahmeeinrichtung, das Objektgefäß oder der Karusselleinsatz Synchronisationsmarkierungen auf. Diese könnten beispielsweise von einer Lichtschranke detektiert werden. Hierdurch ist eine eindeutige Zuordnung der abgetasteten Bilddaten zu den entsprechenden Positionen der Objektaufnahmeeinrichtung möglich.

Nach einer weiteren Ausführungsform ist eine Rücktransformation der in Zylinderkoordinaten vorliegenden gemessenen Bilddaten in Katesische Koordinaten vorgesehen. Auch hierzu wird die Information der Synchronisationsmarkierungen der Objektaufnahmeeinrichtung, des Objektgefäßes oder des Karusselleinsatzes einbezogen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche, andererseits auf die nachfolgende Erläuterung von Ausführungsbeispielen der Erfindung anhand der Zeichnungen zu verweisen. In Verbindung mit der Erläuterung der bevorzugten Ausfüshrungsbeispiele anhand der Zeichnungen werden auch im allgemeinen bevorzugte Ausgestaltungen und Weiterbildungen der Lehre erläutert. In der Zeichnung zeigt
- Fig. 1: in einer schematischen Prinzip-Darstellung ein Ausführungsbeispiel einer erfindungsgemäßen Vorrichtung zur optischen Abtastung mehrerer Objekte,
- Fig. 2: in einer schematischen Draufsicht schematisch einen Karusseleinsatz der erfindungsgemäßen Vorrichtung zur optischen Abtastung mehrerer Objekte und
- Fig. 3: in einer schematischen Seitendarstellung einen Karusselleinsatz mit darin positioniertem Objektträger.

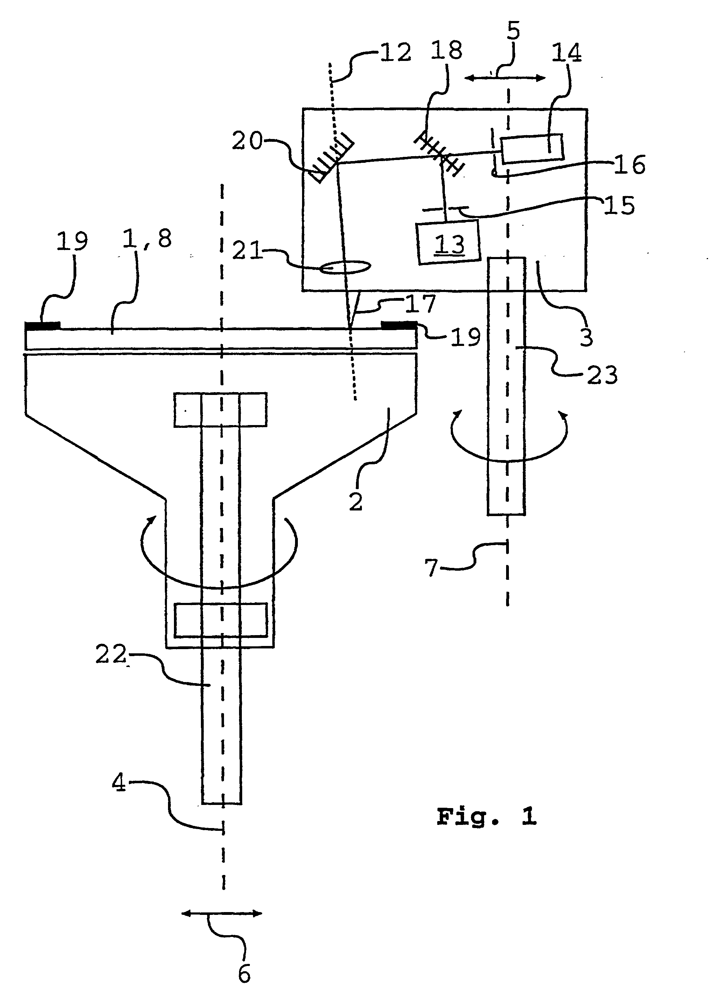

Fig. 1 zeigt eine Vorrichtung zur optischen Abtastung mehrerer Objekte 1 und/oder Objektbereiche, wobei die Objekte einer Objektaufnahmeeinrichtung 2 zugeordnet und von einer Abtasteinrichtung 3 optisch abtastbar sind.

Erfindungsgemäß ist die Objektaufnahmeeinrichtung 2 um eine Achse 4 in einer Richtung drehbar. Die Objektaufnahmeeinrichtung 2 ist während ihrer Drehung durch die Achslagerstange 22 geführt. Die Abtasteinrichtung 3 ist gemäß Bezugszeichen 5 linear verschiebbar, und zwar in radialer Richtung. Alternativ hierzu könnte auch die Objektaufnahmeeinrichtung 2 in Richtung 6 verschiebbar sein. Die Abtasteinrichtung 3 könnte um eine weitere Achse 7 drehbar bzw. schwenkbar angeordnet sein, in diesem Fall durch eine Achslagerstange 23 geführt.

Bei der linearen Verschiebung der Abtasteinrichtung 3 in Richtung 5 bleibt der optische Weg zwischen Objekt 1 und Abtasteinrichtung 3 im wesentlichen konstant, da die Verschiebungsrichtung 5 senkrecht zur Achse 4 angeordnet ist.

Die Objektaufnahmeeinrichtung 2 weist während der Datenaufnahme eine konstante Rotationsgeschwindigkeit auf. Lediglich bei der Objektbestückung wird die Objektaufnahmeeinrichtung 2 angehalten. Die Objektaufnahmeeinrichtung 2 weist darüber hinaus eine große Masse auf, ist rotationssymetrisch ausgebildet und nimmt einen austauschbaren Karusselleinsatz 8 auf.

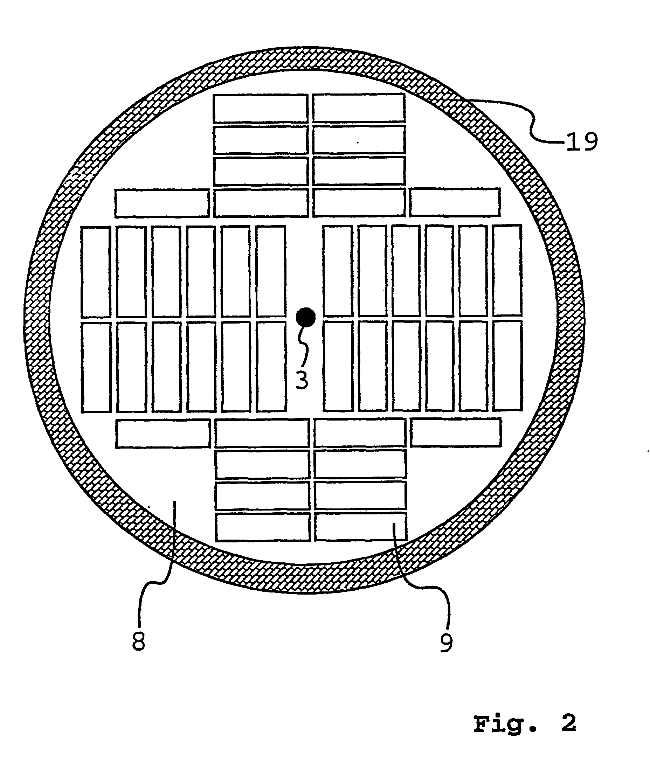

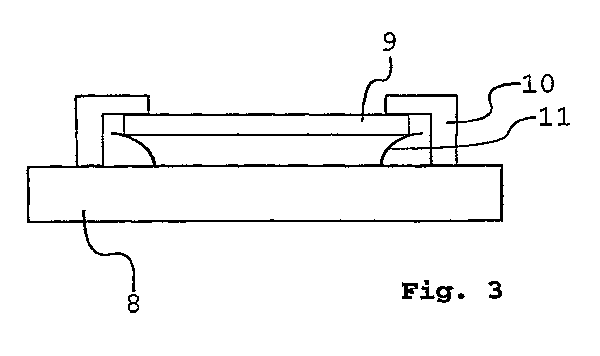

Fig. 2 zeigt einen Karusselleinsatz 8, der einzelne Objektträger 9 aufnimmt. Der Fig. 3 ist entnehmbar, dass die einzelnen Objektträger 9 am Karusselleinsatz 8 mit Haltemitteln 10 in einer vorgebbaren Ebene positionierbar sind. Der einzelne Objektträger 9 wird mit Federn 11 nach oben gegen das Haltemittel 10 gedrückt. Hierbei definiert die Berührungsfläche des Objektträgers 9 mit dem Haltemittel 10 die Ebene, in der die einzelnen Objektträger zu positionieren sind. Die Oberfläche der rotierenden Objektaufnahmeeinrichtung 2 sowie die Oberflächen der im Karusselleinsatz befindlichen Objektträger 9 weisen in Richtung der optischen Achse 12 der Abtasteinrichtung 3 stets eine maximale Abweichung auf, die kleiner als 20 µm ist. Die Objektaufnahmeeinrichtung 2 wie auch der Karusselleinsatz 8 sind Drehteile, die mit einer entsprechenden feinmechanischen Genauigkeit angefertigt sind. Insbesondere die Anordnung der Haltemittel 10 auf dem Karusselleinsatz 8 ist mit entsprechender Genauigkeit gefertigt.

Die Objekte 1 werden mit einem Laserstrahl von dem Laser 13 abgetastet. Das Detektionslicht der Objekte 1 wird mit einem Detektor 14 detektiert. Der Beleuchtungs- und Detektionsstrahl ist relativ zur Abtasteinrichtung 3 ortsfest. Bei dem Laser handelt es sich um einen ArKr-Laser (Argon-Krypton-Laser), der der Laserlicht unterschiedlicher Wellenlängen emittiert. Die optischen Elemente im Strahlengang der Abtasteinrichtung 3 sind so ausgewählt, dass die axiale Ausdehnung des Fokusbereichs des Laserstrahls im Objektbereich 1 kleiner als 40 µm und die laterale Ausdehnung ca. 25 µm beträgt. Der optische Strahlengang in der Abtasteinrichtung 3 ist konfokal ausgebildet. Das dem Laser 13 nachgeordnete Anregungs-Pinhole 15 wirkt als Beleuchtungs-Punktlichtquelle. Das dem Detektor 14 vorgeordnete Detektions-Pinhole 16 wirkt als Detektionslochblende. Der gesamte optische Strahlengang der Abtasteinrichtung 3 ist derart angeordnet, dass der Einfallswinkel des Laserstrahls auf die Oberfläche der im Karusselleinsatz 8 befindlichen Objektträger 9 10 Grad beträgt, was andeutungsweise der Fig. 1 entnehmbar ist. Alternativ hierzu könnte lediglich der Spiegel 20 in Verbindung mit der Linse 21 derart angeordnet sein, dass der Einfallswinkel 10 Grad beträgt. Aufgrund des Einfallswinkels von 10 Grad wird der am Übergang Luft-Glas der Objektträger 9 auftretende Hauptreflex 17 aus dem Beleuchtung- und Detektionsstrahlengang herausreflektiert. Hierdurch kann der dichroitische Strahlteiler 18 auf Grundlage seiner Wellenlängencharakteristik in bezug auf das zu detektierende Fluoreszenzlicht ausgewählt werden, um nämlich unerwünschte Anteile des Hauptreflexes des Beleuchtungslichts am Luft-Glas-Übergang nicht gesondert herausfiltern zu müssen.

Der in Fig. 2 gezeigte Karusselleinsatz 8 weist Synchronisationsmarkierungen 19 auf, die von einer nicht gezeigten Lichtschranke detektiert werden. Mit Hilfe der Synchronisationssignale in Verbindung mit dem Positionssignal der sich in linearer Richtung 5 bewegenden Abtasteinrichtung 3 wird eine Zuordnung des gemessenen Objekt-Detektionssignals zu der entsprechenden Ortskoordinate bezogen auf den Karusselleinsatz 8 ermöglicht.

Zur Darstellung und/oder Dokumentation der Datenaufnahme, beispielsweise auf einem Bildschirm, kann eine Rücktransformation der in Zylinderkoordinaten vorliegenden gemessenen Bilddaten in kartesische Koordinaten durchgeführt werden.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

### Bezugszeichenliste

- 1: Objekt, Objektbereich
- 2: Objektaufnahmeeinrichtung
- 3: Abtasteinrichtung
- 4: Achse von (1)
- 5: Lineare Verschiebungsrichtung von (2)
- 6: Lineare Verschiebungsrichtung von (1)
- 7: weitere Achse von (2)
- 8: Karusselleinsatz
- 9: Objektträger
- 10: Haltemittel
- 11: Feder
- 12: optische Achse
- 13: Laser
- 14: Detektor
- 15: Anregungs-Pinhole
- 16: Detektions-Pinhole
- 17: Hauptreflex
- 18: dichroitischer Strahlteiler
- 19: Synchronisationsmarkierungen
- 20: Spiegel
- 21: Linse, Objektiv
- 22: Achslagerstange von (2)
- 23: Achslagerstange von (3)

## Patentansprüche

1. Vorrichtung zur optischen Abtastung mehrere Objekte (1) und/oder Objektbereiche, wobei die Objekte (1) einer Objektaufnahmeeinrichtung (2) zugeordnet und von einer Abtasteinrichtung (3) optisch abtastbar sind, die Objektaufnahmeeinrichtung (2) um eine Achse (4) drehbar ist, und die Abtasteinrichtung (3) einen Laserstrahl aussendet und linear relativ zur Objektaufnahmeinrichtung (2) verschiebbar ist, **dadurch gekennzeichnet, dass** die Objektaufnahmeinrichtung (2) linear relativ zur Abtasteinrichtung (3) verschiebbar ist, dass die Abtasteinrichtung (3) um eine weitere Achse (7) drehbar oder schwenkbar angeordnet ist, und dass die Objektaufnahmeeinrichtung (2) einen austauschbaren Karusselleinsatz (8) aufnimmt,
und dass der Laserstrahl auf des Oberfläche des Karusselleinsatzes (8) einen Einfallswinkel von 10 Grad aufweist.

2. Vorrichtung nach Anspruch 1, **dadurch gekennzeichnet, dass** der Karusselleinsatz (8) Synchronisationsmarkierungen (19) aufweist.

3. Vorrichtung nach Anspruch 1, **dadurch gekennzeichnet, dass** bei einer Relativbewegung zwischen Abtasteinrichtung (3) und Objektaufnahmeinrichtung (2) der optische Weg zwischen Objekt (1) und Abtasteinrichtung (3) im wesentlichen konstant bleibt.

4. Vorrichtung nach Anspruch 1, **dadurch gekennzeichnet, dass** die Objektaufnahmeeinrichtung (2) rotationssymmetrisch zur Drehachse (4) ausgebildet ist.

5. Vorrichtung nach Anspruch 1, **dadurch gekennzeichnet**, das der Karusselleinsatz (8) einzelne Objektträger (9) aufnimmt.

6. Vorrichtung nach Anspruch 5, **dadurch gekennzeichnet, dass** die einzelnen Objektträger (9) am Karusselleinsatz (8) mit Haltemitteln (10) in einer vorgebbaren Ebene positionierbar sind.

7. Vorrichtung nach einem der Ansprüche 1 bis 6, **dadurch gekennzeichnet, dass** eine Autofokussierung der Objekte (1) vorgesehen ist.

8. Vorrichtung nach einem der Ansprüche 1 bis 7, **dadurch gekennzeichnet, dass** die Objekte (1) mit mindestens einem Laserstrahl abtastbar und mit mindestens einem Detektor (14) detektierbar sind, dass der Laserstrahl mindestens in einer Richtung scannbar ist, und dass das Abtasten mit Laserlicht unterschiedlicher Wellenlängen erfolgt..

9. Vorrichtung nach Anspruch 8, **dadurch gekennzeichnet, dass** die axiale Ausdehnung des Fokusbereichs des Laserstrahls im Objektbereich kleiner als 40 µm ist und dass die laterale Ausdehnung des Fokusbereichs des Laserstrahls im Objektbereich in einem Bereich zwischen 5 µm und 200 µm liegt.

10. Vorrichtung nach Anspruch 8, **dadurch gekennzeichnet, dass** der optische Strahlengang der Abtasteinrichtung (3) konfokal ausgebildet ist.

11. Vorrichtung nach Anspruch 10, **dadurch gekennzeichnet, dass** der Einfallswinkel des Laserstrahls auf der Oberfläche der Objektaufnahmeeinrichtung (2) oder auf den Objektträgern (9) ungleich Null ist.

## Claims

1. Apparatus for the optical scanning of several objects (1) and/or object regions, the objects (1) being assigned to an object holder (2) and being capable of optical scanning by a scanner (3), the object holder (2) being rotatable about an axis (4), and the scanner (3) emitting a laser beam and being displaceable linearly relative to the object holder (2), **characterized in that** the object holder (2) can be displaced linearly relative to the scanner (3), **in that** the scanner (3) is arranged such that it can rotate or swivel about a further axis (7), and **in that** the object holder (2) accommodates an exchangeable revolving insert (8), and **in that** the angle of incidence of the laser beam onto the surface of the revolving insert (8) is 10 degrees.

2. Apparatus according to Claim 1, **characterized in that** the revolving insert (8) has synchronization markings (19).

3. Apparatus according to Claim 1, **characterized in that** the optical path between the object (1) and scanner (3) remains essentially constant during a relative movement between the scanner (3) and object holder (2).

4. Apparatus according to Claim 1, **characterized in that** the object holder (2) is designed to be rotationally symmetrical relative to the rotation axis (4).

5. Apparatus according to Claim 1, **characterized in that** the revolving insert (8) accommodates the individual object supports (9).

6. Apparatus according to Claim 5, **characterized in that** the individual object supports (9) can be positioned in a prescribable plane on the revolving insert (8) with the aid of retaining means (10).

7. Apparatus according to one of Claims 1 to 6, **characterized in that** autofocusing of the objects (1) is provided.

8. Apparatus according to one of Claims 1 to 7, **characterized in that** the objects (1) can be scanned with at least one laser beam and can be detected with at least one detector (14), **in that** the laser beam can be scanned at least in one direction, and **in that** the scanning is performed with laser light of different wavelengths.

9. Apparatus according to Claim 8, **characterized in that** the axial extent of the focal range of the laser beam in the object region is smaller than 40 µm, and **in that** the lateral extent of the focal region of the laser beam in the object region is in a range of between 5 µm and 200 µm.

10. Apparatus according to Claim 8, **characterized in that** the optical beam path of the scanner (3) is of confocal design.

11. Apparatus according to Claim 10, **characterized in that** the angle of incidence of the laser beam on the surface of the object holder (2) or on the object supports (9) is not equal to zero.

## Revendications

1. Dispositif de balayage optique de plusieurs objets (1) et/ou zones d'objet, les objets (1) étant associés à un dispositif d'attachement d'objet (2) et étant balayés de manière optique par un dispositif de balayage (3), le dispositif d'attachement d'objet (2) pouvant tourner autour d'un axe (4), et le dispositif de balayage (3) émettant un rayon laser et pouvant être déplacé de manière linéaire par rapport au dispositif d'attachement d'objet (2), **caractérisé en ce que** le dispositif d'attachement d'objet (2) peut être déplacé de manière linéaire par rapport au dispositif de balayage (3), que le dispositif de balayage (3) est disposé de manière à pouvoir tourner ou pivoter autour d'un autre axe (7) et que le dispositif d'attachement d'objet (2) reçoit un insert rotatif (8) interchangeable, et que le rayon laser présente un angle d'incidence de 10 degrés sur la surface de l'insert rotatif (8).

2. Dispositif selon la revendication 1, **caractérisé en ce que** l'insert rotatif (8) présente des repères de synchronisation (19).

3. Dispositif selon la revendication 1, **caractérisé en ce que** lors du mouvement relatif entre le dispositif de balayage (3) et le dispositif d'attachement d'objet (2), le trajet optique entre l'objet (1) et le dispositif de balayage (3) demeure pour l'essentiel constant.

4. Dispositif selon la revendication 1, **caractérisé en ce que** le dispositif d'attachement d'objet (2) est configuré en symétrie rotationnelle par rapport à l'axe de rotation (4).

5. Dispositif selon la revendication 1, **caractérisé en ce que** l'insert rotatif (8) reçoit des porte-objets individuels (9).

6. Dispositif selon la revendication 5, **caractérisé en ce que** les porte-objets (9) individuels peuvent être positionnés sur l'insert rotatif (8) à l'aide de moyens de maintien (10) dans un plan qui peut être prédéfini.

7. Dispositif selon l'une des revendications 1 à 6, **caractérisé en ce qu'**il est prévu une concentration automatique sur les objets (1).

8. Dispositif selon l'une des revendications 1 à 7, **caractérisé en ce que** les objets (1) peuvent être balayés avec au moins un rayon laser et peuvent être détectés avec au moins un détecteur (14), que le rayon laser peut effectuer un balayage dans au moins une direction et que le balayage est réalisé avec une lumière laser à différentes longueurs d'onde.

9. Dispositif selon la revendication 8, **caractérisé en ce que** l'expansion axiale de la zone de concentration du rayon laser dans la zone de l'objet est inférieure à 40 µm et que l'expansion latérale de la zone de concentration du rayon laser dans la zone de l'objet est comprise entre 5 µm et 200 µm.

10. Dispositif selon la revendication 8, **caractérisé en ce que** le trajet du rayon optique du dispositif de balayage (3) est configuré à foyer commun.

11. Dispositif selon la revendication 10, **caractérisé en ce que** l'angle d'incidence du rayon laser sur la surface du dispositif d'attachement d'objet (2) ou sur les porte-objets (9) est différent de zéro.
